# EUROPÄISCHE PATENTSCHRIFT

(11) **EP 1 228 958 B1**
(45) Veröffentlichungstag und Bekanntmachung des Hinweises auf die Patenterteilung: **07.09.2005**
(21) Anmeldenummer: 01130020.9
(22) Anmeldetag: 18.12.2001
(51) Int. Cl.: B63H 1/26, F01D 5/14, B64C 11/20

(54) **Verfahren zur Reduzierung der Geräuschabstrahlung von Propellern**
Method for reducing the noise emission of propellers
Méthode pour réduire l'émission de bruit des hélices

(30) Priorität: 02.02.2001 DE 10104662
(43) Veröffentlichungstag der Anmeldung: 07.08.2002
(73) Patentinhaber: HOWALDTSWERKE-DEUTSCHE WERFT AG, 24143 Kiel (DE)
(72) Erfinder: Wittekind, Dietrich, Dr.-Ing., 24223 Raisdorf (DE); Franitza, Siegfried, Dr.-Ing., 23566 Lübeck (DE)
(74) Vertreter: Köckeritz, Günter

(56) Entgegenhaltungen:
- WO-A-93/09026
- DE-A- 3 420 259
- RU-C- 2 130 403
- US-A- 5 108 262
- US-A- 6 059 533

## Beschreibung

Die Erfindung betrifft eine Verwendung einer Dämpungsschicht zur Reduzierung der Geräuschabstrahlungen und Schwingungen von Propellern bzw. Rotorblättern.

Es ist bekannt, dass durch Einbringung künstlicher Dämpfung das Eigenschwingungsverhalten von Propellern bzw. Rotorblättern (z.B. von Schiffsschrauben, Luftschrauben, Windmühlenflügeln, Rotorblättern usw.) so beeinflußt werden kann, dass die Geräuschabstrahlung stark reduziert wird. Unerwünschte Effekte aus Propellerblattschwingungen sind besonders in der Schiffahrt bekannt und dort besonders bei Militärfahrzeugen. Kritisch ist dort, dass wegen der sehr geringen Materialdämpfung die Gesamtdämpfung nur durch das umgebende Wasser bestimmt wird. Diese reicht meist nicht aus, um unerwünschte Resonanzen zu unterdrücken.
Als Gegenmittel wird gelegentlich versucht durch besondere Wahl eines hochdämpfenden Materials, z.B. einer stark manganhaltigen Bronze - bekannt unter dem Namen "Sonoston" ― eine Reduzierung zu erreichen. Nach der US-PS 6,059,533Es können auch sogenannte Schwingungstilger eingesetzt werden, die auf die Eigenfrequenzen der Propeller abgestimmt sind.
Üblich ist auch die in der EP 0375 296 A1 beschriebene Bearbeitung der austretenden Kante zu Erreichung spezieller Profilformen. Es gibt jedoch keine sichere Vorgehensweise für ein garantiertes Ergebnis. Die Maßnahme wird nach dem Prinzip "Versuch und Irrtum" angewandt. Die Zielrichtung dieser Maßnahme ist auch eher das "Propellersingen", während die tiefsten Schwingungsfrequenzen unberücksichtigt bleiben.

In der RU 2130403 C1 wird eine Maßnahme speziell an der austretenden Kante von Propellerblättern zur Unterdrückung des Propellersingens beschrieben.
In der DE 34 20 259 A1 wird ein kavitationsgeminderter Schiffspropeller vorgestellt zum Schutz des Propellers gegen Erosion infolge Kavitation. Keine der oben beschriebenen Maßnahmen hat bislang zu einer zuverlässigen Reduzierung oder gar Beseitigung der Schwingungsproblematik und damit der Geräuschabstrahlung geführt. Grund dafür ist, dass keine Maßnahme im erforderlichem Maße Dämpfung in das schwingende System einbringt, die die Dämpfung aus dem mitschwingenden Medium überschreitet.

Der vorliegenden Erfindung liegt deshalb die Aufgabe zugrunde, eine neue Verwendung einer Dämpungsschicht vorzuschlagen, welche die aus dem genannten Stand der Technik bekannten Lösungen verbessert und damit die Geräuschabstrahlung von Propeller- bzw. Rotorblättern reduziert.

Erfindungsgemäß wird diese Aufgabe durch die Merkmale des Anspruchs 1 gelöst. Vorteilhafte Weiterbildungen der Erfindung sind in zugehörigen Unteransprüchen enthalten.
Demnach beinhaltet die Erfindung die Verwendung einer Dämpfungsschicht zur Reduzierung der Geräuschabstrahlung von Propellern, die aus Nabe und Propellerflügeln bestehen, wobei mindestens ein Propellerflügel im Wurzelbereich mit einer Dämpfungsschicht aus einem dämpfenden Material oder einer dämpfenden Struktur versehen wird. Die Dämpfungsschicht kann auf der Oberfläche des Propellerflügels aufgebracht werden und/oder in die Propellerflügelstruktur integriert werden. Dabei wird Material mit hoher Eigendämpfung in den Propeller, der sonst aus niedrig bedämpften Material besteht, integriert oder aufgebracht. Damit wird die Dämpfung in ausreichendem Maße erhöht, so dass eine wirksame Pegelreduzierung oder gar eine Beseitigung der Resonanzen sichergestellt werden kann. Besondere Wirksamkeit tritt bei Flügeln aus Elastomer- oder Verbundwerkstoffen ein. Maßnahmen auf Basis der vorliegenden Erfindung sind auch bei existierenden Propellern möglich. Die Anordnungsmöglichkeiten des Materials werden dabei so genutzt, dass damit das Verformungsverhalten der Propellerblätter in Richtung Erregungsreduzierung beeinflusst wird.
Nach einem bevorzugten Merkmal der Erfindung wird die Oberfläche des Propellerflügels mit der Dämpfungsschicht aus einem viskoelastischen Material einseitig beschichtet. Es ist auch möglich die einseitige Beschichtung des Propellerflügels mit einem viskoelastischen Belag mit Deckplatte vorzunehmen, wobei es sich hier um ein spezielles an die Deckplatte gebundenes Material handelt.

Nach einem weiteren Merkmal wird die Beschichtung durch aufklebbare Platten vorgenommen.
Die Beschichtung wird nach einem besonderen Merkmal in Form eines 2 -Komponentenmaterials auf der Basis von Polyurethan aufgespachtelt. Nach einem bevorzugten weiteren Merkmal wird die Dämpfungsschicht aus dem dämpfenden Material bzw. der Struktur in das Grundmaterial des Propellerflügels eingebracht.
Mit der Einbringung des Materials lassen sich wesentlich höhere Dämpfungen erzielen, allerdings ist die Gestaltung des Propellerblattes damit schwieriger. Dies rührt daher, daß das Material in Zonen großer Schubverformung eingebracht werden muß, wo es andererseits unerwünschte Wirkungen auf Verformung unter Last (und damit das hydro/aerodynamische Verhalten) und Festigkeit haben kann. Die günstigste Gestaltung unter Berücksichtigung aller Anforderungen ist mit dem Einsatz von Faserverbundwerkstoffen für die Propellerblätter möglich. Damit lässt sich die hohe Dämpfung auch in Kombination mit gezielten anregungsreduzierenden Maßnahmen einsetzen. Die Erfindung soll nachfolgend anhand von in den Zeichnungen dargestellten Ausführungsbeispielen näher erläutert werden.

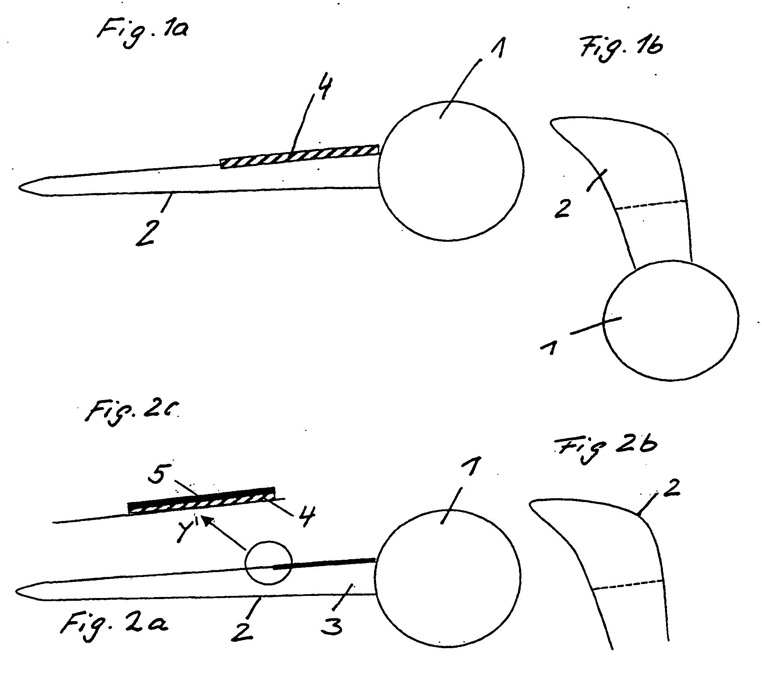

In den Zeichnungen zeigen
- Figur 1a:: radialer Querschnitt durch einen Propeller mit einseitiger Beschichtung,
- Figur 1 b:: Aufsicht auf die Ausführung nach Figur 1a,
- Figur 2a:: radialer Querschnitt durch einen Propeller mit einseitiger Beschichtung und Deckplatte,
- Figur 2b:: Aufsicht auf die Ausführung nach Figur 2a,
- Figur 2c:: Detail "Y" aus Figur 2a,

Der Propeller besteht aus der Nabe 1 und den Flügeln 2, von denen nur einer gezeigt wird. Die Flügelform ergibt sich aus den Erfordernissen des Antriebs und der Aero/Hydrodynamik und Festigkeitsgrenzen.
Die einfachste Ausführung der erfindungsgemäßen Verwendung besteht in der einseitigen Beschichtung 4, z.B. im Wurzelbereich gemäß den Figuren 1 a und 1 b.
Der einseitige Belag wird aufgespachtelt und klebt selbständig am Grundmaterial. Alternativ kann eine fertige Platte bestehend aus dem Dämmmaterial auf die zu dämpfende Struktur aufgebracht werden.
Die damit erzielbaren Dämpfungswerte sind zumindest bei Schiffspropellern aus Metall klein, weil die erforderliche Schichtdicke ähnlich wie die lokale Blattdicke sein müßte, was in der Regel hydrodynamisch nicht verträglich wäre.

Eine deutliche Steigerung lässt sich erzielen durch die Ausführung der Erfindung gemäß den den Figur 2a, 2b und 2c mit dem Prinzip "eingezwängter Belag" mit einer dünnen Dämpfungsschicht mit Deckplatte (5). Letztere würde nicht zur Steifigkeit und Festigkeit des Blattes beitragen und muss nicht unbedingt aus dem Grundmaterial (3) des Blattes bestehen, sondern kann aus einem steiferen Werkstoff bestehen. Der Belag wird ebenfalls aufgespachtelt und klebt selbständig am Grundmaterial. Alternativ kann eine fertige Platte oder Folie aus dem Dämmmaterial auf die zu dämpfende Struktur aufgebracht werden. Bei beiden Alternativen wird zusätzlich eine Deckplatte aufgeklebt.
In einer komplexen Berechnung unter Zuhilfenahme der Methode der Finiten Elemente wird die Struktur mit einem möglichen Dämpfungssystemaufbau berechnet und hinsichtlich Festigkeit, Steifigkeit und Dämpfung optimiert.
Bei einem Metallpropeller wird die viskoelastische Schicht in Schlitze in der Flügelstruktur nachträglich eingebracht, oder die Grundform des Propellers ist so gewählt, dass erst das nachträgliche Aufbringen von Strukturteilen, die dann ganz oder teilweise von der Grundstruktur über eine Dämpfungsschicht entkoppelt sind, die endgültige hydrodynamische Form herstellt.
Bei einem Faserverbundpropeller kann die Dämpfungsstruktur wie beim Metallpropeller eingebracht werden, oder bei der Herstellung des Propellers in die Blätter gemäß Berechnung einlaminiert werden.

## Patentansprüche

1. Verwendung einer Dämpfungsschicht (4) aus einem dämpfenden Material oder einer dämpfenden Struktur auf der Oberfläche und/oder in der Propellerflügelstruktur eines Propellers, bestehend aus Nabe (1) und Propelterflügeln (2) für ein Unter- oder Überwasserfahrzeug,
**dadurch gekennzeichnet, dass**
die Dämpfungsschicht (4) im Wurzelbereich mindestens eines Propellerflügels (2) zur Reduzierung von Schwingungen angeordnet ist.

2. Verwendung nach Anspruch 1, **dadurch gekennzeichnet, dass** die Dämpfungsschicht (4) aus dem dämpfenden Material bzw. der Struktur im Grundmaterial (3) des Propellerflügels (2) angeordnet ist.

3. Verwendung nach Anspruch 1, **dadurch gekennzeichnet, dass** die Oberfläche des Propellerflügels (2) einseitig mit der Dämpfungsschicht (4) beschichtet ist.

4. Verwendung nach Anspruch 3, **dadurch gekennzeichnet, dass** die einseitige Beschichtung des Propellerflügels (2) aus einem viskoelastischen Belag mit Deckplatte besteht.

5. Verwendung nach Anspruch 3, **dadurch gekennzeichnet, dass** die Beschichtung aus einem aufspachtelbarem 2-Komponentenmaterial auf der Basis von Polyurethan besteht.

6. Verwendung nach Anspruch 3, **dadurch gekennzeichnet, dass** die Beschichtung aus aufgeklebten Platten oder Folien besteht.

## Claims

1. Use of a damping layer (4) made of a damping material or of a damping structure on the surface and/or in the propeller blade structure of a propeller, comprising a hub (1) and propeller blades (2) for a submarine or surface vessel,
**characterised in that**
the damping layer (4) is disposed in the root region at least of one propeller blade (2) in order to reduce vibrations.

2. Use according to claim 1, **characterised in that** the damping layer (4) made of the damping material or structure is disposed in the basic material (3) of the propeller blade (2).

3. Use according to claim 1, **characterised in that** the surface of the propeller blade (2) is coated on one side with the damping layer (4).

4. Use according to claim 3, **characterised in that** the one-sided coating of the propeller blade (2) comprises a viscoelastic covering with cover plate.

5. Use according to claim 3, **characterised in that** the coating comprises a 2-component material which can be trowel-applied and is based on polyurethane.

6. Use according to claim 3, **characterised in that** the coating comprises adhering plates or films.

## Revendications

1. Utilisation d'une couche d'amortissement (4) en matériau amortissant ou en structure amortissante à la surface et/ou dans la structure des pales d'hélice d'une hélice, composée d'un moyeu (1) et de pales d'hélice (2) pour un véhicule submersible ou de surface, **caractérisée en ce que** la couche d'amortissement (4) est disposée dans la zone de la racine d'au moins une pale d'hélice (2) pour réduire les vibrations.

2. Utilisation selon la revendication 1, **caractérisée en ce que** la couche d'amortissement (4) en matériau amortissant et/ou en structure amortissante est disposée dans le matériau de base (3) de la pale d'hélice (2).

3. Utilisation selon la revendication 1, **caractérisée en ce que** la surface de la pale d'hélice (2) est revêtue sur une face de la couche d'amortissement (4).

4. Utilisation selon la revendication 3, **caractérisée en ce que** le revêtement sur une face de la pale d'hélice (2) est composé d'une couche viscoélastique avec une plaque de couverture.

5. Utilisation selon la revendication 3, **caractérisée en ce que** le revêtement est composé d'un matériau à 2 composants à base de polyuréthane pouvant être appliqué par enduction.

6. Utilisation selon la revendication 3, **caractérisée en ce que** le revêtement est composé de plaques ou de films collés.
